# EUROPÄISCHE PATENTSCHRIFT

(11) **EP 2 110 914 B1**
(45) Veröffentlichungstag und Bekanntmachung des Hinweises auf die Patenterteilung: **06.12.2017**
(21) Anmeldenummer: 09005523.7
(22) Anmeldetag: 20.04.2009
(51) Int. Cl.: H02G 5/02

(54) **Stromsammelschienenvorrichtung**
Busbar device
Dispositif de barre omnibus

(30) Priorität: 18.04.2008 DE 102008019794
(43) Veröffentlichungstag der Anmeldung: 21.10.2009
(73) Patentinhaber: Rittal GmbH & Co. KG, 35745 Herborn (DE)
(72) Erfinder: Wagener, Hans, 35716 Dietzhölztal (DE)
(74) Vertreter: Angerhausen, Christoph

(56) Entgegenhaltungen:
- EP-A1- 1 335 465
- DE-A1- 2 516 404
- DE-A1- 3 238 483
- DE-U- 7 102 682
- FR-A1- 2 453 521

## Beschreibung

Die Erfindung bezieht sich auf eine Stromsammelschienenvorrichtung mit mindestens einer zu einem Paket zusammengefassten Sammelschieneneinheit aus mehreren in einer Tragvorrichtung gehaltenen Stromsammelschienen, die im Querschnitt rechteckförmig und mit ihren flachen breiten Längsseiten unter Abstand parallel zueinander angeordnet sind, wobei pro Sammelschieneneinheit ein sie ringsum einschließender Berührungsschutz aus Isoliermaterial abnehmbar angebracht ist, der beiderseits von den schmalen Längsseiten der Stromsammelschienen her aufgesetzte, die gesamte Breite der Sammelschieneneinheit überspannende erste Abdeckabschnitte mit zwischen den Stromsammelschienen liegenden Eingriffteilabschnitten sowie die breiten Längsseiten der Sammelschieneneinheit überdeckende weitere Abdeckabschnitte aufweist. Eine derartige Stromsammelschienenvorrichtung ist in der FR 2 453 521 A1 offenbart.

Eine Stromsammelschienenvorrichtung dieser Art ist auch in der DE 32 38 483 A1 angegeben. Bei dieser bekannten Stromsammelschienenvorrichtung sind flache Stromsammelschienen in einem Kanal in Abstand zueinander geführt und von ihren schmalen Längsseiten her einerseits mit einem unteren Halteteil und andererseits mit einem oberen Abdeckteil isolierend abgedeckt. Die Halteteile und Abdeckteile sind im Querschnitt kammartig ausgebildet, wobei Stege (Zinken) in die Zwischenräume zwischen den Stromschienen eingreifen. Auf den Außenseiten der beiden außen liegenden Stromschienen sind diese von ineinander greifenden seitlichen Abschnitten des Halteteils und des Abdeckteils übergriffen. Insbesondere bei Sammelschienen größeren Querschnitts, die höher, breiter und mit größerem Abstand angeordnet sind, erfordern derartige Abdeckteile nicht geringen Materialbedarf und sind auch nicht einfach in der Herstellung und in der Handhabung. Eine derartige Stromsammelschienenvor-richtung ist in der FR 2 453 521 A1 offenbart.

In der DE 71 02 682 U ist eine weitere Stromsammelschienenvorrichtung mit Berührungsschutzabdeckung gezeigt, die aus zwei ineinander greifenden, im Querschnitt im Wesentlichen L-förmigen Abdeckteilen mit darin aufgenommenem Stromschienenträger mit zwischen die beabstandeten Stromsammelschienen greifenden Elementen besteht. Diese Berührungsschutzvorrichtung ist relativ platzaufwändig und wäre z. B. ungünstig bei eng begrenzten Räumen in Schaltschränken.

Eine weitere Stromsammelschienenvorrichtung ist in der (nicht vorveröffentlichten) deutschen Patentanmeldung Nr. 10 2007 003 937 gezeigt. Hierbei sind mehrere Stromsammelschienen rechteckförmigen Querschnitts beabstandet voneinander in einer gemeinsamen Tragvorrichtung als Sammelschieneneinheit zu einem Paket zusammengefasst. Halter der Tragvorrichtung sind dabei so ausgestaltet, dass die Sammelschieneneinheiten in einem gemeinsamen Aufnahmeteil gelagert sind und mit diesem in dem Halter wahlweise in zwei um 90° um die Längsachse der Sammelschieneneinheit gedrehten Lagen montierbar sind. Stege in den Aufnahmeteilen legen dabei auch die Abstände zwischen den einzelnen Stromsammelschienen der paketierten Sammelschieneneinheit fest. Durch die Abstände zwischen den Stromsammelschienen werden Spalte gebildet, die zu einer Kühlung der Sammelschienen beitragen. Die Tragevorrichtung ergibt vielfältige Einbaumöglichkeiten von Sammelschieneneinheiten insbesondere in einem Schaltschrank oder Rack bei einfacher Montage. Dabei ist jedoch dem Personenschutz besonders Rechnung zu tragen.

Der Erfindung liegt die Aufgabe zugrunde, eine Stromsammelschienenvorrichtung der eingangs genannten Art bereit zu stellen, die bei möglichst uneingeschränkten Anordnungsmöglichkeiten und einfacher Handhabung einen zuverlässigen Schutz vor einer Gefährdung von Personen durch elektrischen Strom bietet.

Diese Aufgabe wird mit den Merkmalen des Anspruches 1 gelöst. Hierbei ist vorgesehen, dass die Abdeckabschnitte im Querschnitt an die Breite der schmalen Längsseiten der Stromsammelschienen angepasste erhabene Teilabschnitte und zwischen diesen liegend die an den Abstand der Stromsammelschienen innerhalb einer Sammelschieneneinheit angepassten Eingriffteilabschnitte aufweisen und entlang ihrer längsseitigen Endabschnitte beidseitig mit Verbindungsabschnitten versehen sind und dass die Abdeckabschnitte bis auf die Verbindungsabschnitte im Wesentlichen gleich bleibende Wandstärke aufweisen und im Querschnitt mäanderförmig sind.

Mit diesen Maßnahmen können in einem Schaltschrank oder Rack installierte Stromsammelschienen gegen eine unbeabsichtigte Berührung mit wenig Montageaufwand zuverlässig gegen Berührung isoliert werden. Die weiteren Abdeckabschnitte, die die breiten flachen Längsseiten der außen liegenden Stromsammelschienen abdecken, können dabei z. B. durch seitliche, an den Abdeckabschnitten angeformte Überlappungsabschnitte oder mittels separater Abdeckabschnitte gebildet werden. Dabei wird eine eindeutige, sichere Anbringung des Berührungsschutzes begünstigt.

Auch werden eine einfache Herstellung und einfache Handhabung erreicht. Solche Abdeckabschnitte können einfach als Längsprofile aus Kunststoff extrudiert und für den Gebrauch geeignet abgelängt werden.

Die Kühlung der Stromsammelschienen wird dabei dadurch unterstützt, dass die Abdeckabschnitte jeweils in dem Bereich zwischen den Stromsammelschienen mit Lüftungsöffnungen versehen sind.

Verschiedene vorteilhafte Ausgestaltungen des Berührungsschutzes ergeben sich dadurch, dass die weiteren Abdeckabschnitte an den Abdeckabschnitten einstückig angeformt oder als separate, mit den Abdeckabschnitten verbindbare Teile ausgebildet sind. Dabei lässt sich insbesondere der Berührungsschutz mit den separaten weiteren Abdeckabschnitten leicht an den Sammelschieneneinheiten anbringen, da die mäanderförmigen Abdeckabschnitte einfach positioniert und vorfixiert und anschließend die separaten seitlichen Abdeckabschnitte angebracht werden können.

Zu einer einfachen Handhabung bei sicherer Anbringung tragen dabei die Maßnahmen bei, dass die weiteren Abdeckabschnitte an ihren Längsrändern mit Verbindungsgegenabschnitten versehen sind, die an die Verbindungsabschnitte zum Herstellen einer Verbindung, insbesondere Schnapp- oder Rastverbindung, angepasst sind.

Die Anbringung des Berührungsschutzes wird auch dadurch begünstigt, dass sich die längsseitigen Endabschnitte der Abdeckabschnitte parallel zu den breiten Längsseiten der Stromsammelschienen entlang der beiderseitigen Außenflächen der zugeordneten Sammelschieneneinheit erstrecken.

Die Erfindung wird nachfolgend anhand von Ausführungsbeispielen unter Bezugnahme auf die Zeichnungen näher erläutert. Es zeigen:
- Fig. 1: einen Ausschnitt einer Stromsammelschienenvorrichtung mit in einer Tragevorrichtung gehaltenen und mit einem Berührungsschutz versehenen Sammelschieneneinheiten mit vertikal angeordneten Stromsammelschienen in perspektivischer Ansicht,
- Fig. 2: einen Ausschnitt einer Stromsammelschienenvorrichtung mit in einer Tragevorrichtung gehaltenen, mit einem Berührungsschutz versehenen Sammelschieneneinheiten mit horizontal angeordneten Stromsammelschienen in perspektivischer Ansicht,
- Fig. 3: ein weiteres Ausführungsbeispiel für eine Stromsammelschienenvorrichtung mit einer in einer Tragvorrichtung gehaltenen, mit einem Berührungsschutz versehenen Sammelschieneneinheit in perspektivischer Ansicht,
- Fig. 4: ein weiteres Ausführungsbeispiel für eine in einer Tragvorrichtung gehaltene Sammelschieneneinheit mit Berührungsschutz in perspektivischer Ansicht,
- Fig. 5: die Stromsammelschienenvorrichtung nach Fig. 4 in einer Aufsicht und in einer stirnseitigen Ansicht,
- Fig. 6: eine Stromsammelschienenvorrichtung mit in einer Tragevorrichtung gehaltenen und mit einem Berührungsschutz versehenen Sammelschieneneinheit in seitlicher Ansicht bei horizontal gehaltenen Stromsammelschienen,
- Fig. 7: eine Stromsammelschienenvorrichtung mit in einer Tragevorrichtung gehaltenen, mit einem Berührungsschutz versehenen Sammelschieneneinheit in seitlicher Ansicht,
- Fig. 8A und 8B: eine Stromsammelschienenvorrichtung mit einer in einer Tragevorrichtung gehaltenen, mit einem Berührungsschutz versehenen Sammelschieneneinheit in stirnseitiger Ansicht bei horizontal angeordneten bzw. vertikal angeordneten Stromsammelschienen,

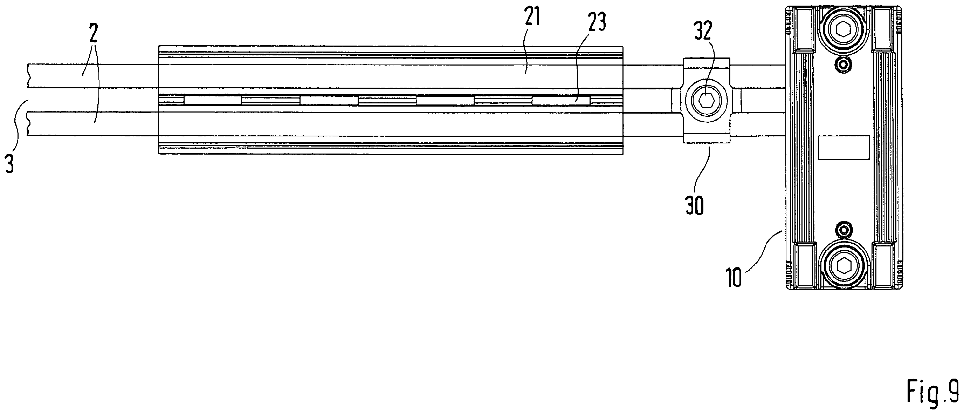

- Fig. 9: eine Stromsammelschienenvorrichtung mit einer in einer Tragevorrichtung gehaltenen, mit einem Berührungsschutz versehenen Sammelschieneneinheit aus zwei Stromsammelschienen und einer Kontaktierkralle in Draufsicht,
- Fig. 10: einen Abdeckabschnitt eines Berührungsschutzes für eine Sammelschieneneinheit mit zwei Stromsammelschienen in Draufsicht, seitlicher Ansicht und einer stirnseitigen Ansicht,
- Fig. 11: einen Abdeckabschnitt eines Berührungsschutzes für eine Sammelschieneneinheit mit drei Stromsammelschienen in Draufsicht, einer seitlichen Ansicht und einer stirnseitigen Ansicht,
- Fig. 12: einen Abdeckabschnitt eines Berührungsschutzes für eine Sammelschieneneinheit mit vier Stromsammelschienen in Draufsicht, einer seitlichen Ansicht und einer stirnseitigen Ansicht,
- Fig. 13: einen weiteren Abdeckabschnitt eines Berührungsschutzes für eine Sammelschieneneinheit mit Stromsammelschienen einer ersten Höhe in seitlicher Ansicht, Draufsicht und einer stirnseitigen Ansicht,
- Fig. 14: einen weiteren Abdeckabschnitt eines Berührungsschutzes für eine Sammelschieneneinheit mit Stromsammelschienen einer zweiten Höhe in seitlicher Ansicht, in Draufsicht und in stirnseitigen Ansicht und
- Fig. 15A und 15B: einen Verbindungsbereich zwischen einem Abdeckabschnitt und einem weiteren Abdeckabschnitt eines Berührungsschutzes in perspektivischer Ansicht bzw. in stirnseitiger Ansicht.

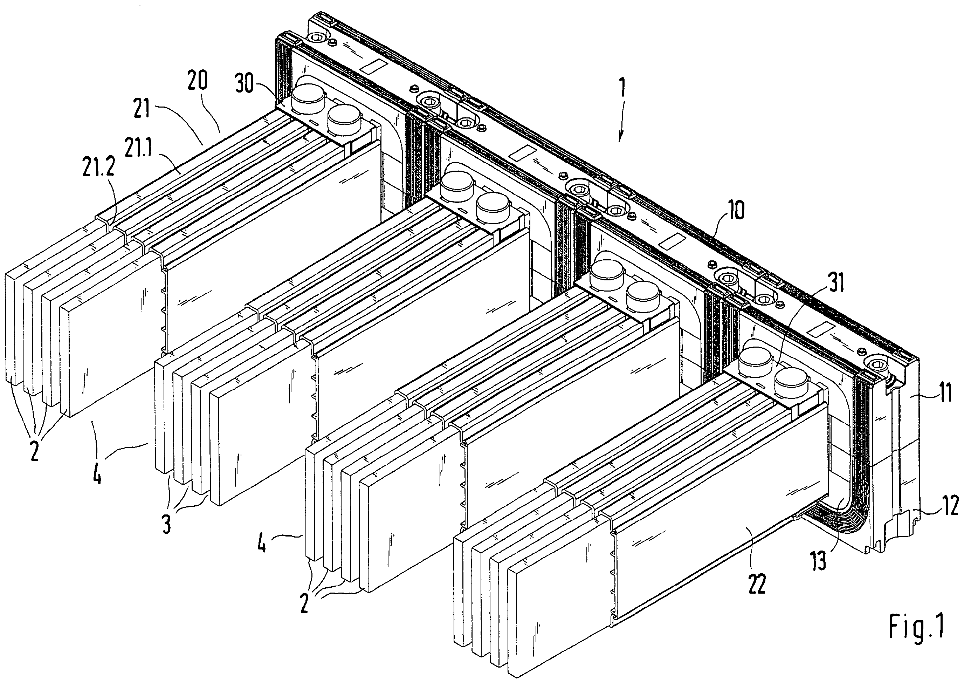

Fig. 1 zeigt einen Ausschnitt aus einer Stromsammelschienenvorrichtung mit vier in einer Tragevorrichtung 1 gehaltenen Sammelschieneneinheiten 4 mit jeweils vier zu einem Paket zusammengefassten, vertikal orientierten Stromsammelschienen 2 rechteckförmigen Querschnitts. Die Sammelschieneneinheiten 4 sind jeweils in einem Aufnahmeteil 13 eines Halters 10 aus miteinander verspanntem Oberteil 11 und Unterteil 12 aufgenommen, wobei in dem Aufnahmeteil 13 für die einzelnen Stromsammelschienen 2 an deren Querschnitt angepasste schlitzförmige Durchgänge gebildet sind, die durch Rippen voneinander getrennt sind, so dass die Stromsammelschienen 2 parallel mit ihren breiten Längsseiten unter Bildung eines jeweiligen Spaltes 3 gleich weit voneinander beabstandet sind. Die Aufnahmeteile 13 sind in dem Halter 10 bei gelöstem Oberteil 11 und Unterteil 12 beliebig um 90° um die Längsachse der Stromsammelschienen 2 gedreht einsetzbar, wie in der eingangs genannten deutschen Patentanmeldung 10 2007 003 937 näher ausgeführt. Durch die mit solchen Haltern 10 ausgebildete Tragvorrichtung 1 ergeben sich vielfältige variable Anordnungsmöglichkeiten der zu Sammelschieneneinheiten 4 zusammengefassten Stromsammelschienen 2, wobei in dem Halter 10 auch mehr oder weniger viele Stromsammelschienen 2 aufgenommen sein können. Mittels der Tragvorrichtung 1 sind derartige Sammelschieneneinheiten 4 in einem Schaltschrank oder Rack auf vielfältige Weise variabel installierbar. Im Zusammenhang mit der variablen Installierbarkeit ergeben sich jedoch besondere Anforderungen an einen Berührungsschutz für Personen vor elektrischen Strömen. Hierzu ist den pro Halter 10 aufgenommenen Sammelschieneneinheiten 4 ein gemeinsamer Berührungsschutz 20 zugeordnet.

Der Berührungsschutz 20 weist jeweils einen von den beiden schmalen Längsseiten der im Querschnitt rechteckförmigen Stromsammelschienen 2 her aufgesetzten Abdeckabschnitt 21 auf, der auf den Schmalseiten der Stromsammelschienen 2 aufliegende erhabene Teilabschnitte 21.1 und in die Spalte 3 zwischen den Stromsammelschienen 2 eingreifende Eingriffteilabschnitte 21.2 besitzt. Die erhabenen Teilabschnitte 21.1 sind dabei in ihrer lichten Weite an die Stärke der Stromsammelschienen 2 in Richtung ihrer Schmalseiten angepasst, während die Eingriffteilabschnitte 21.2 mit ihrer Außenabmessung an den Abstand zwischen den Stromsammelschienen 2 angepasst sind, wobei ein leichter Klemmsitz zur Fixierung bewirkt ist und die Tiefe der Eingriffabschnitte 21.2 etwa 0,5 bis 2 cm betragen kann. Der Abdeckabschnitt 21 hat dabei im Wesentlichen gleich bleibende Wandstärke und ist mäanderförmig ausgestaltet, wobei die äußeren breiten Längsseiten der zugeordneten Sammelschieneneinheit 4 in ihrem an die schmale Längsseite der betreffenden Stromsammelschiene 2 angrenzenden Bereich beiderseits von Seitenabschnitten 21.4 abgedeckt sind. Von den Seitenabschnitten 21.4 stehen über deren Länge von der Außenseite der Sammelschieneneinheit 4 weg gerichtet jeweilige Verbindungsabschnitte 21.3 vor.

Die breiten Längsseiten der außen liegenden Stromsammelschienen 2 einer Sammelschieneneinheit 4 sind zwischen den Seitenabschnitten 21.4 der von den schmalen Längsseiten der Stromsammelschienen 2 von beiden Seiten her aufgesetzten Abdeckabschnitte 21 auf beiden Seiten der Sammelschieneneinheit 4 von weiteren Abdeckabschnitten 22 abgedeckt, die flache Abdeckwände 22.1 aufweisen, welche auf ihrer der Außenseite der Sammelschieneneinheit 4 zugewandten Innenseite Stützstege 22.2 tragen, die an der Abdeckwand 22.1 des weiteren Abdeckabschnittes 22 angeformt sind. An ihren beiden in Längsrichtung verlaufenden Rändern sind die weiteren Abdeckabschnitte 22 mit Verbindungsgegenabschnitten 22.3 versehen, die an die Verbindungsabschnitte 21.3 in Lage und Form angepasst sind, um die Verbindungsgegenabschnitte 22.3 an den Verbindungsabschnitten 21.3 durch Aufrasten in Verbindung zu bringen.

Zum Kontaktieren der Sammelschieneneinheiten 4 sind Kontaktierkrallen 30 vorgesehen, die mittels separater, abnehmbarer isolierender Abdeckstücke 31 berührungssicher abgedeckt sind. Die Abdeckabschnitte 21, weiteren Abdeckabschnitte 22 sowie Abdeckstücke 31 sind aus Isoliermaterial, insbesondere Kunststoff hergestellt. Die Abdeckabschnitte 21 und weiteren Abdeckabschnitte 22 können bei dieser Ausbildung vorteilhaft durch Extrudieren hergestellt und die erhaltenen Profile können einfach in der erforderlichen Länge abgelängt werden. Dabei sind die Abdeckabschnitte 21 im Bereich der Abdeckstücke 31 ausgespart bzw. gekürzt, während die weiteren Abdeckabschnitte 22 sich über die Breite der Abdeckstücke 31 hinweg erstrecken und mit diesen vermittels ihrer Verbindungsgegenabschnitte 22.3 und an den Abdeckstücken 31 angebrachter, komplementär ausgebildeter weiterer Verbindungsabschnitte in Verbindung gebracht werden können.

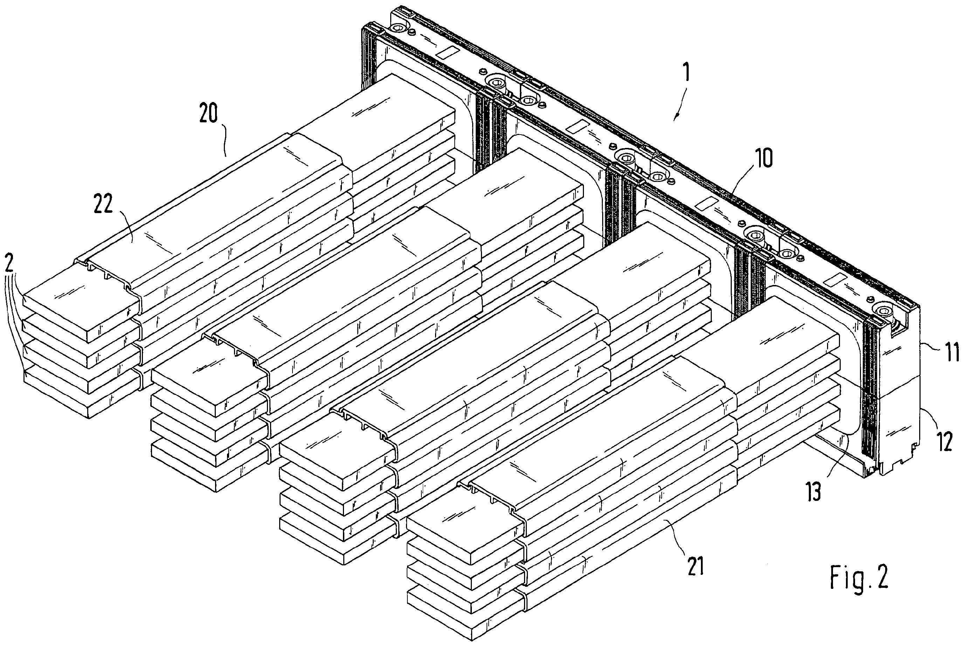

Während bei dem Ausführungsbeispiel nach Fig. 1 die Stromsammelschienen 2 der Sammelschieneneinheiten 4 vertikal in den Haltern 10 aufgenommen sind, sind die Stromsammelschienen 2 bei dem Ausführungsbeispiel nach Fig. 2 horizontal in den Haltern 10 gehalten. Im Übrigen ist bei diesem Ausführungsbeispiel der Aufbau der Stromsammelschienenvorrichtung entsprechend ausgeführt, wie bei dem Ausführungsbeispiel nach Fig. 1. Auch hierbei ergibt der im Querschnitt mäanderförmige, an die schmalen Längsseiten der Stromsammelschienen und die dazwischen liegenden Spalte der Sammelschieneneinheit angepasste Aufbau der Abdeckabschnitte 21 eine eindeutige Positionierung bereits eine Vorfixierung und einfache anschließende Fertigmontage des Berührungsschutzes 20 unter Vervollständigung mit den weiteren Abdeckabschnitten 22.

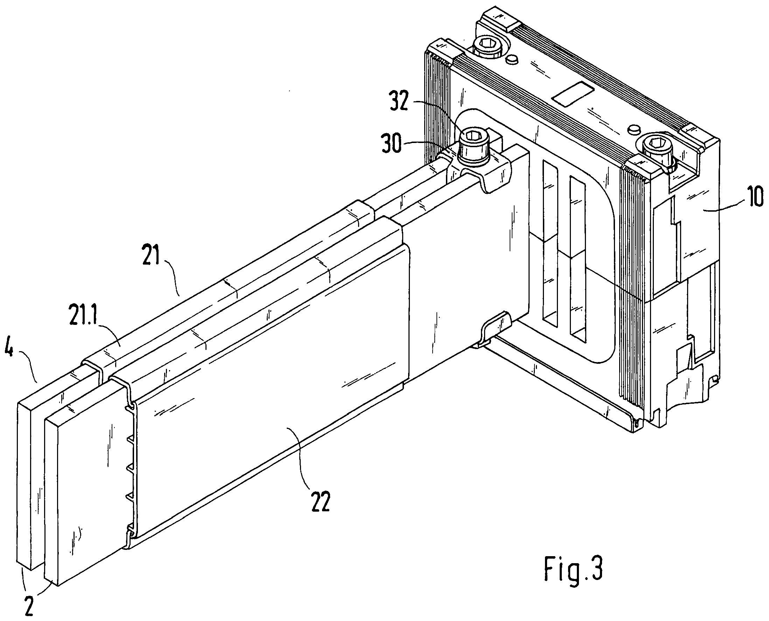

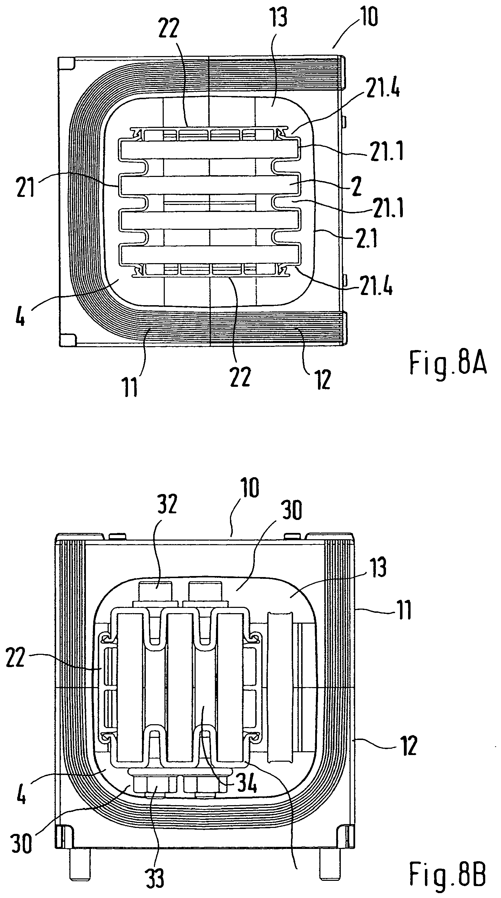

Bei dem in Fig. 3 gezeigten Ausführungsbeispiel besteht die Sammelschieneneinheit 4 aus nur zwei Stromsammelschienen 2, und der Abdeckabschnitt 22 ist in seiner die Sammelschieneneinheit 4 überbrückenden Ausdehnung entsprechend angepasst und besitzt demgemäß nur zwei erhabene Teilabschnitte 21.1 mit einem in den Spalt zwischen den Stromsammelschienen 2 ragenden Eingriffteilabschnitt 21.2 sowie zwei Seitenabschnitte 21.4 mit jeweiligen Verbindungsabschnitten 21.3, an denen die weiteren Abdeckabschnitte 22 mit ihren Verbindungsgegenabschnitten 22.3 angebracht, beispielsweise verrastet werden. Auch die Kontaktierkralle 30 ist an die Breite der Sammelschieneneinheit 4 angepasst und besitzt nur ein in den Spalt 3 zwischen den Stromsammelschienen 2 eingreifendes Krallenpaar sowie die Sammelschieneneinheit 4 auf ihren beiden Außenseiten übergreifende klauenartige seitliche Abschnitte. Zwei auf den schmalen Längsseiten der Stromsammelschienen 2 gegenüberliegende Kontaktierkrallen 30 sind mittels einer Spannschraube 32 mit einem einen Innensechskant aufweisenden Schraubkopf gegeneinander verspannt, wobei ein Spannbolzen 34 (vgl. Fig. 8B) den Spalt 3 durchragt und mit einer auf der dem Schraubkopf gegenüberliegenden Endabschnitt der Spannschraube 32 auf der Außenseite der dort angeordneten Kontaktierkralle 30 positionierten Spannmutter 33 in Eingriff gebracht ist.

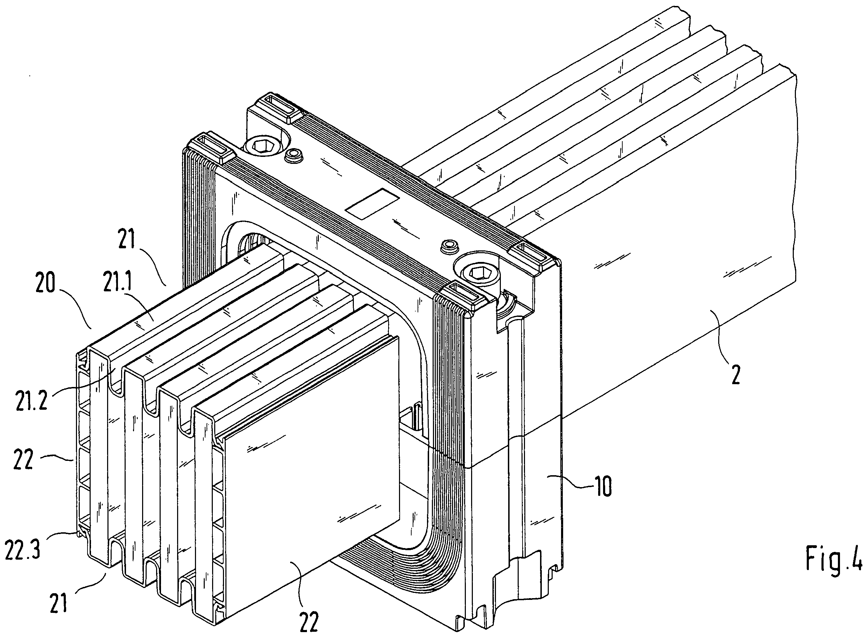

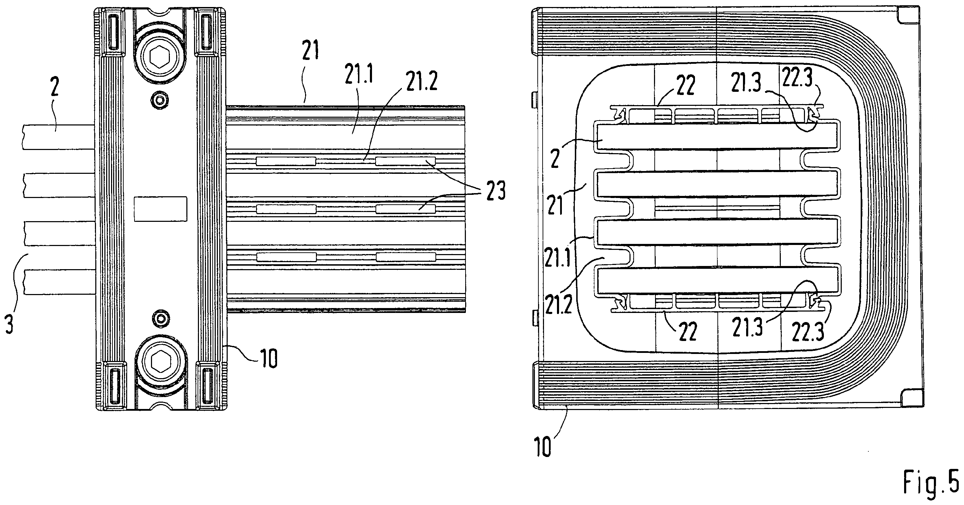

Fig. 4 zeigt in vergrößerter Darstellung eine in einem Halter 10 gehaltene Sammelschieneneinheit 4 aus vier Stromsammelschienen 2, die auf der einen Seite des Halters 10 mit einem Berührungsschutz 20 aus zwei Abdeckabschnitten 21 und zwei weiteren Abdeckabschnitten 22 des vorstehend beschriebenen Aufbaus berührungssicher isoliert ist. Dabei sind die Eingriffteilabschnitte 21.2, wie auch bei den vorhergehenden Ausführungsbeispielen, so schmal ausgebildet, dass kein Finger hineinpasst. In der in Fig. 5 (rechts) gezeigten stirnseitigen Ansicht der in Fig. 4 dargestellten Stromsammelschienenvorrichtung ist der an der Sammelschieneneinheit 4 angelegte Berührungsschutz 20 mit den beiden im Querschnitt mäanderförmigen Abdeckabschnitten 21 und den damit verbundenen weiteren Abdeckabschnitten 22, wobei die Verbindungsgegenabschnitte 22.3 mit den Verbindungsabschnitten 21.3 verrastet sind, genauer ersichtlich. In der in Fig. 5 (links) dargestellten Draufsicht der Stromsammelschienenvorrichtung ist insbesondere der Abdeckabschnitt 21 genauer wiedergegeben, wobei im Basisabschnitt der im Querschnitt U-förmigen Eingriffteilabschnitte 21.2 eingebrachte Lüftungsöffnungen 23 deutlich wiedergegeben sind. Die Lüftungsöffnungen 23 sind dabei als längs verlaufende, äquidistant angeordnete Lüftungsschlitze ausgebildet und sind auf beiden sich gegenüberliegenden Abdeckabschnitten 21 eingebracht, so dass Luft durch die Spalte 3 zwischen den Stromsammelschienen 2 zum Kühlen der Stromsammelschienen 2 trotz Abdeckung mit dem Berührungsschutz 20 hindurch strömen kann. Die Lüftungsöffnungen 23 sind dabei schmal gehalten, um eine Berührung der Stromsammelschienen 2 z. B. mit einem metallischen Gegenstand durch die ohnehin schwer zugänglichen Eingriffteilabschnitte 21.2 möglichst weitgehend auszuschließen.

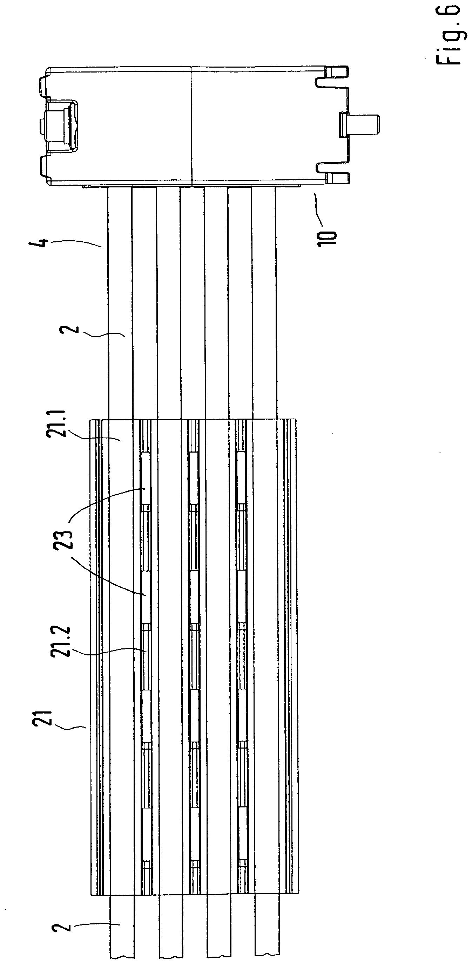

Auch Fig. 6 zeigt einen Ausschnitt aus einer Stromsammelschienenvorrichtung mit einer Sammelschieneneinheit 4 aus vier in einem Halter 10 gehaltenen Stromsammelschienen 2 in Draufsicht mit einem Abdeckabschnitt 21, der in den Basisabschnitten der im Querschnitt U-förmigen Eingriffteilabschnitte 21.2 schlitzförmige Lüftungsöffnungen 23 aufweist.

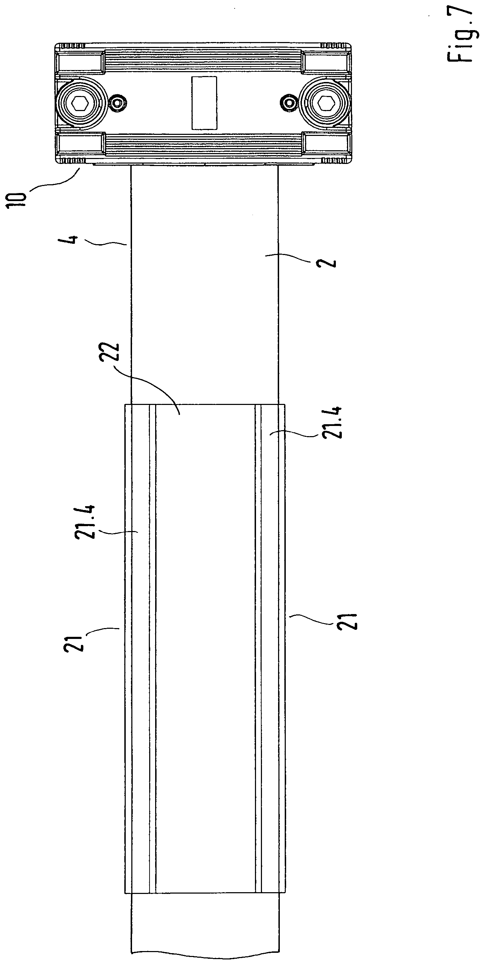

Fig. 7 zeigt die Stromsammelschienenvorrichtung nach Fig. 6 in seitlicher Ansicht auf eine breite Längsseite der Sammelschieneneinheit 4 mit einem dort angeordneten weiteren Abdeckabschnitt 22, der auf zwei Seitenabschnitte 21.4 zweier sich gegenüberliegender Abdeckabschnitte 21 aufgebracht ist.

Fig. 8A zeigt eine in einem Halter 10 in dessen Aufnahmeteil 13 aufgenommene Sammelschieneneinheit 4 aus vier Stromsammelschienen 2 mit angelegtem Berührungsschutz 20 in einer Ansicht von der Stirnseite, wobei auch wiederum die von den schmalen Längsseiten der Stromsammelschienen 2 her aufgesetzten Abdeckabschnitte 21 mit den erhabenen Teilabschnitten 21.1, den dazwischen liegenden Eingriffteilabschnitten 21.2 sowie den Seitenabschnitten 21.4 mit den jeweiligen Verbindungsabschnitten 21.3 zu sehen sind, auf die die Verbindungsgegenabschnitte 22.3 der weiteren Abdeckabschnitte 22 aufgerastet sind. Bei dem in Fig. 8B gezeigten Ausführungsbeispiel sind drei Stromsammelschienen 2 zu einer Sammelschieneneinheit 4 zusammengefasst und in dem Aufnahmeteil 13 eines Halters 10 gehalten und mit einem Berührungsschutz 20 aus zwei Abdeckabschnitten 21 und zwei weiteren Abdeckabschnitten 22 versehen. Ferner ist eine Einheit aus Kontaktierkrallen 30 mit zwei sich auf den schmalen Längsseiten der Stromsammelschienen 2 gegenüberliegenden Krallenteilen gezeigt, die mittels Spannschrauben 32 mit durch die Spalte 3 zwischen den Stromsammelschienen 2 geführten Spannbolzen 34 und aufgedrehten Spannmuttern 33 gegeneinander verspannt sind, um einen elektrischen Anschluss an der Sammelschieneneinheit 4 herzustellen. Die Kontaktierkrallen 30 werden mit isolierenden kappenartigen Abdeckstücken 31 berührungssicher abgedeckt (vgl. Fig. 1). Dabei grenzen stirnseitige Ränder der Abdeckabschnitte 21 an die Kontaktierkrallen 30 mit den Abdeckstücken 31 so dicht an, dass ein Berührungsschutz von der schmalen Längsseite der Stromsammelschienen 2 her sicher gewährleistet ist. Auch auf den breiten Längsseiten überdecken die Abdeckstücke 31 die Kontaktierkrallen und grenzen an die dort über die Breite der Kontaktierkrallen 30 durchgehenden weiteren Abdeckabschnitte 22 ebenfalls dicht an, so dass ein sicherer Berührungsschutz metallischer Teile durch das Isoliermaterial gewährleistet ist (vgl. auch Fig. 1).

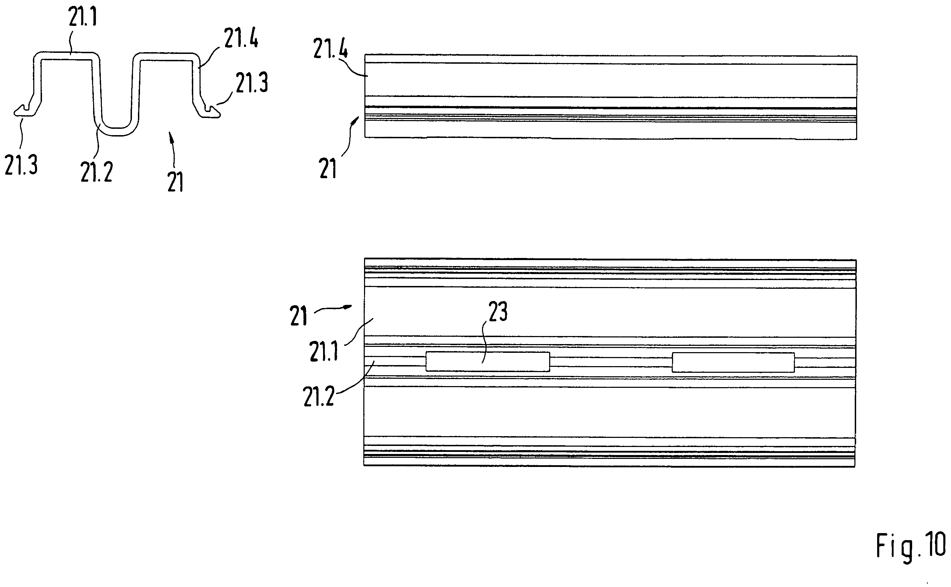

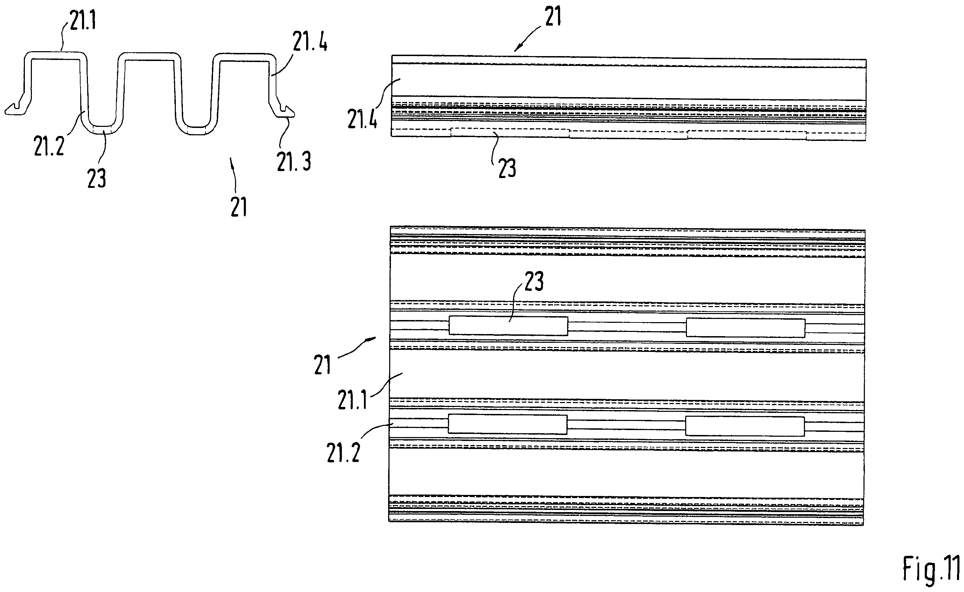

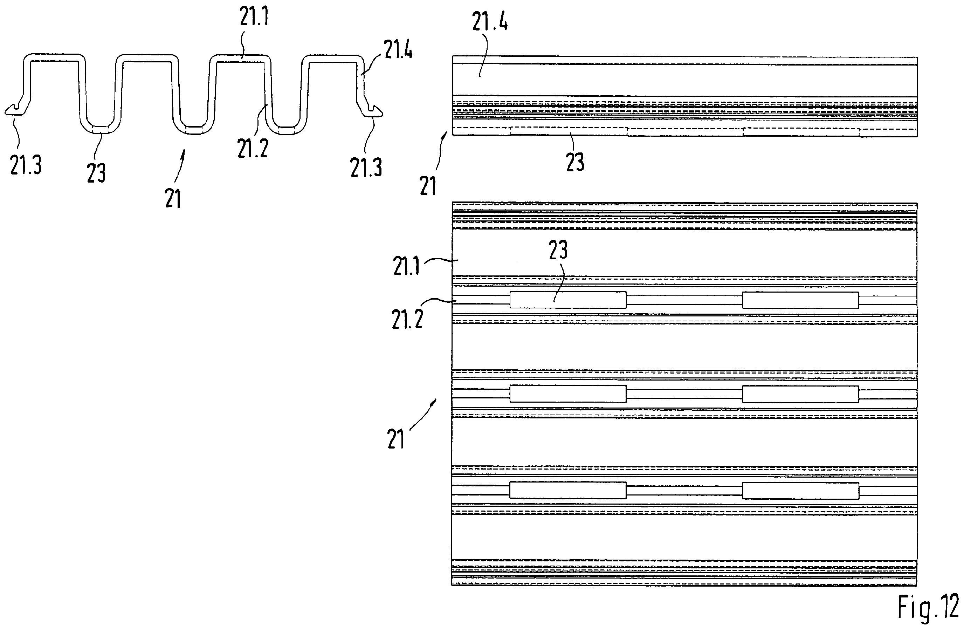

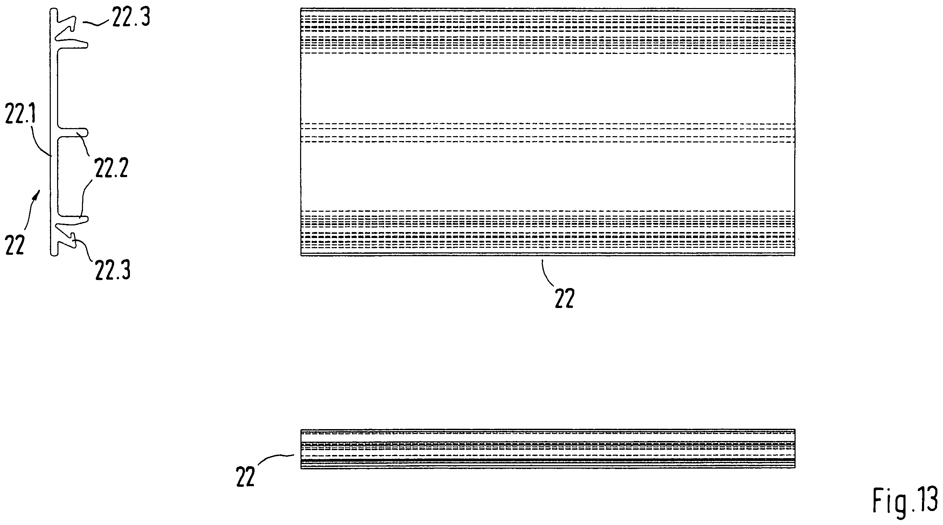

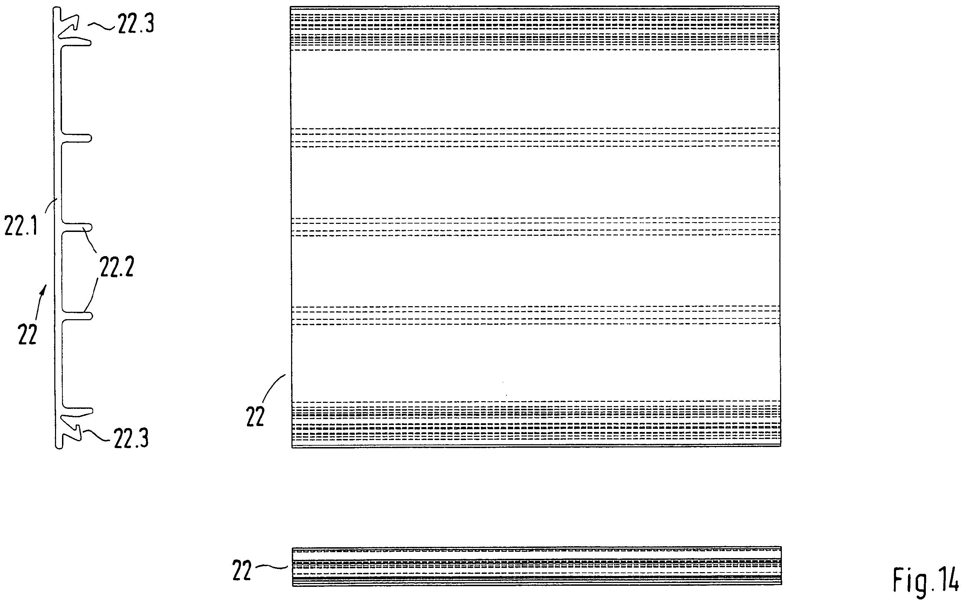

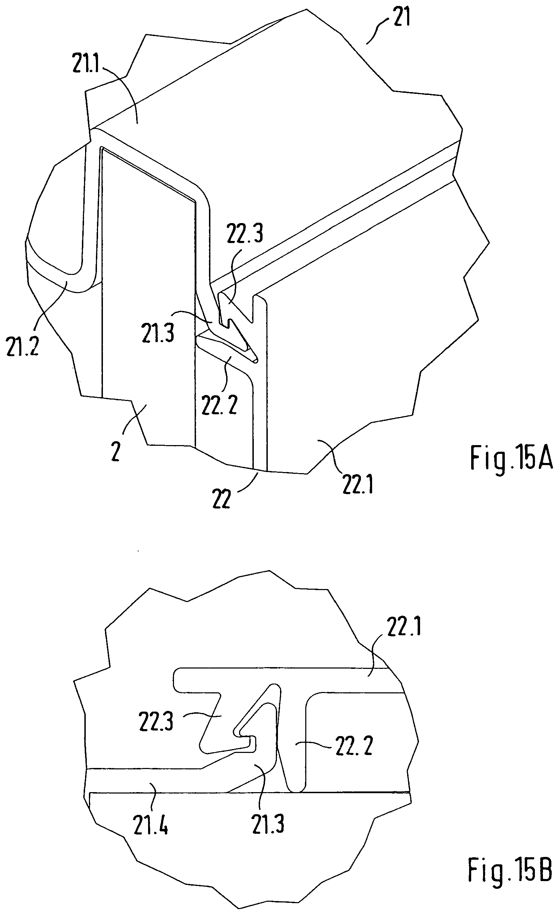

Die Fig. 10, 11 und 12 zeigen verschieden breite Abdeckabschnitte 21 des Berührungsschutzes 20, nämlich zur Abdeckung von Sammelschieneneinheiten 4 mit zwei, drei bzw. vier nebeneinander liegenden Stromsammelschienen 2 jeweils in Draufsicht, seitlicher Ansicht und stirnseitiger Ansicht. Auch hierbei ist die lichte Weite der erhabenen Teilabschnitte 21.1 an die jeweilige Breite der schmalen Längsseiten der Stromsammelschienen 2 angepasst, während die äußere Breite der Eingriffteilabschnitte 21.2 an den Abstand bzw. die Spaltbreite zwischen den Stromsammelschienen 2 angepasst ist. Im Basisabschnitt der im Querschnitt U-förmigen Eingriffteilabschnitte 21.2 sind Reihen von schlitzförmigen Lüftungsöffnungen 23 eingebracht. Die Abdeckabschnitte 21 sind beiderseits mit Seitenabschnitten 21.4 versehen, von denen jeweils die über die Länge verlaufenden Verbindungsabschnitte 21.3 nach außen abstehend angeformt sind. Zum einfachen Aufsetzen auf die Stromsammelschieneneinheit sind die Seitenabschnitte 21.4 auf ihrer Innenseite mit sich zur Öffnungsseite hin erweiternden Einführschrägen oder Rundungen versehen und auch die einführseitigen Übergänge zwischen der Basis und den seitlichen Schenkeln der Eingriffteilabschnitte 21.2 sind mit Rundungen oder Einführschrägen versehen, so dass die Abdeckabschnitte 21 problemlos auf die jeweilige Sammelschieneneinheit 4 unter leichter Klemmung und dadurch erreichte Vorfixierung aufgesetzt bzw. aufgesteckt werden können. Die zur Außenseite hin abstehenden Verbindungsabschnitte 21.3 weisen für die Verbindungsgegenabschnitte 22.3 ebenfalls Einführschrägen als flache Auflaufschrägen auf, die in steile Rastkanten mit anschließender nutartiger Vertiefung übergehen, in die steile Rastgegenkanten der Verbindungsgegenabschnitte 22.3 (vgl. Fig. 13 und 14) rastend einschnappen (vgl. Fig. 15A und 15B).

Die Fig. 13 und 14 zeigen Beispiele für die weiteren Abdeckabschnitte 22 mit verschiedener Breite, die an verschieden hohe breite Längsseiten der Stromsammelschienen 2 bzw. der Sammelschieneneinheit 4 (ergänzend zu den Seitenabschnitten 21.4 der zugeordneten Abdeckabschnitte 21) angepasst sind. In den Fig. 13 und 14 sind dabei jeweils eine Seitenansicht, eine Draufsicht und eine stirnseitige Ansicht der weiteren Abdeckabschnitte 22 dargestellt. In der stirnseitigen Ansicht ist die flache Abdeckwand 22.1 ersichtlich, auf deren einer breiten Längsseite der zuzuordnenden Sammelschieneneinheit 4 zugekehrter Innenseite die Stützstege 22.2 abstehen, wodurch eine stabile Abstützung auf der breiten Längsseite der betreffenden Stromsammelschienen 2 bei möglichst geringer Anlagefläche und Wärmeübertragung erhalten wird. In den beiderseitigen Längsrandbereichen sind ebenfalls auf der Innenseite der Abdeckwand 22.1 die Verbindungsgegenabschnitte 22.3 angeformt, die auf die Auflaufschrägen der Verbindungsabschnitte 21.3 auflaufende und hinter dem jeweiligen steilen Rastabschnitt einrastende Rasthaken mit steilen Rastkanten aufweisen, wie in den Fig. 15A und 15B verdeutlicht.

Wie die Fig. 15A und 15B zeigen, ist zwischen dem freien Ende des hinter dem steilen Rastabsatz des Verbindungsabschnittes 21.3 eingreifenden Hakenteils des Verbindungsgegenabschnittes 22.3 und einem diesem gegenüber beabstandeten Stützsteg 22.2 eine Einführöffnung für eine einzuführende Rastnase des Verbindungsabschnittes 21.3 mit der Einführschräge und dem steilen Rastabsatz freigelassen, wobei die Breite der Einführöffnung zwischen dem freien Ende des Hakenabschnittes und der gegenüberliegenden Flanke des Stützsteges 22.2 geringer ist als die Querschnittsbreite der Rastnase im Übergangsbereich zu dem steilen Rastabsatz. Dadurch wird nach Einrasten des Rasthakens eine sichere Verbindung zwischen dem Verbindungsabschnitt 21.3 und dem Verbindungsgegenabschnitt 22.3 gewährleistet.

Zum einfachen, sicheren Herstellen der Verbindung und Einführen der Rastnase des Verbindungsabschnittes 21.3 ist die dem Hakenabschnitt zugekehrte Flanke des Stützsteges 22.2 zu ihrem freien Ende hin abgeschrägt, so dass die Rastnase mit ihrer zugekehrten Fläche leicht aufgleiten kann, während der Spalt zwischen dem freien Ende des Hakenabschnittes und der zugekehrten Flanke des Stützsteges 22.2 aufgeweitet wird. Um eine gute Funktion bei der Aufweitung zu gewährleisten, ist die Wandstärke der Abdeckwand 22.1 im Bereich des Hakenansatzes des Verbindungsgegenabschnittes 22.3 etwas vermindert und der Stützsteg 22.2 kann ebenfalls zur Erweiterung des Einführspaltes von dem freien Ende des Hakenabschnittes weg elastisch ausgelenkt werden. Sobald die Rastnase zwischen dem Rasthaken und dem benachbarten Stützsteg 22.2 eingeführt ist und die benachbarten steilen Rastkanten des Rasthakens und der Rastnase hintereinander positioniert sind, schnappen die Rastnase und der Rasthaken in Folge der elastischen Anbindung des Rasthakens, unterstützt durch den elastischen Stützsteg, hintereinander ein und ergeben eine stabile Fixierung zwischen dem Verbindungsabschnitt 21.3 und dem Verbindungsgegenabschnitt 22.3. Dadurch, dass die Abdeckwand 22.1 den Hakenansatz des Verbindungsgegenabschnittes 21.3 mit ihrem Randbereich seitlich etwas überragt und die Abdeckwand 22.1 im Verbindungsabschnitt etwas verjüngt ist, lässt sich die Verbindung mit etwas Kraftaufwand aber bei guter Handhabung lösen.

Die Abdeckabschnitte 21 und weiteren Abdeckabschnitte 22 des Berührungsschutzes 20 lassen sich vorteilhaft aus Kunststoff extrudieren und in der erforderlichen Länge ablängen, so dass eine einfache Fertigung und Lagerhaltung erreicht werden. Dabei können mit Abdeckabschnitten 21 verschiedener Breiten und Anpassung der erhabenen Teilabschnitte 21.1 und Eingriffteilabschnitte 21.2 an verschiedene Sammelschienenbreiten und Abstände sowie durch weitere Abdeckabschnitte 22 verschiedener Breite Bausätze für einen variabel an verschiedene Sammelschieneneinheiten 4 aus standardisierten Stromsammelschienen 2 anpassbaren Berührungsschutz 20 mit relativ wenigen verschiedenen Teilen vorgehalten werden.

## Patentansprüche

1. Stromsammelschienenvorrichtung mit mindestens einer zu einem Paket zusammengefassten Sammelschieneneinheit (4) aus mehreren in einer Tragvorrichtung (1) gehaltenen Stromsammelschienen (2), die im Querschnitt rechteckförmig und mit ihren flachen breiten Längsseiten unter Abstand parallel zueinander angeordnet sind, wobei pro Sammelschieneneinheit (4) ein sie ringsum einschließender Berührungsschutz (20) aus Isoliermaterial abnehmbar angebracht ist, der beiderseits von den schmalen Längsseiten der Stromsammelschienen (2) her aufgesetzte, die gesamte Breite der Sammelschieneneinheit (4) überspannende erste Abdeckabschnitte (21) sowie die breiten Längsseiten der Sammelschieneneinheit (4) überdeckende weitere Abdeckabschnitte (22) aufweist; **dadurch gekennzeichnet, dass** die ersten Abdeckabschnitte (21) im Querschnitt an die Breite der schmalen Längsseiten der Stromsammelschienen (2) angepasste erhabene Teilabschnitte (21.1) und zwischen diesen liegende, an den Abstand der Stromsammelschienen (2) innerhalb einer Sammelschieneneinheit (4) angepasste Eingriffteilabschnitte (21.2) aufweisen und entlang ihrer längsseitigen Endabschnitte beidseitig mit Verbindungsabschnitten (21.3) versehen sind und dass die ersten Abdeckabschnitte (21) bis auf die Verbindungsabschnitte (21.3) eine gleich bleibende Wandstärke aufweisen und im Querschnitt mäanderförmig sind.

2. Stromsammelschienenvorrichtung nach Anspruch 1, **dadurch gekennzeichnet, dass** die ersten Abdeckabschnitte (21) jeweils in dem Bereich zwischen den Stromsammelschienen (2) mit Lüftungsöffnungen (23) versehen sind.

3. Stromsammelschienenvorrichtung nach einem der vorhergehenden Ansprüche, **dadurch gekennzeichnet, dass** die weiteren Abdeckabschnitte (22) an den ersten Abdeckabschnitten (21) einstückig angeformt oder als separate, mit den ersten Abdeckabschnitten (21) verbindbare Teile ausgebildet sind.

4. Stromsammelschienenvorrichtung nach Anspruch 3, **dadurch gekennzeichnet, dass** die weiteren Abdeckabschnitte (22) an ihren Längsrändern mit Verbindungsabschnitten (22.3) versehen sind, die an den Verbindungsabschnitten (21.3) zum Herstellen einer Verbindung, insbesondere Schnapp- oder Rastverbindung angepasst sind.

5. Stromsammelschienenvorrichtung nach einem der Ansprüche 1 bis 6, **dadurch gekennzeichnet, dass** sich die längsseitigen Endabschnitte der ersten Abdeckabschnitte (21) parallel zu den breiten Längsseiten der Stromsammelschienen (2) entlang der beiderseitigen Außenflächen der zugeordneten Sammelschieneneinheit (4) erstrecken.

6. Stromsammelschienensystem nach einem der Ansprüche 3 bis 5, **dadurch gekennzeichnet, dass** die die Verbindungsabschnitte (21.3) von den benachbarten breiten Längsseiten der Sammelschieneneinheit (4) weg nach außen erstrecken und dass die Verbindungsgegenabschnitte (22.3) auf der zur Außenseite der breiten Längsseiten der Sammelschieneneinheit (4) gewandten Innenseite der weiteren Abdeckabschnitte (22) angeordnet sind.

7. Stromsammelschienenvorrichtung nach einem der Ansprüche 3 bis 6, **dadurch gekennzeichnet, dass** auf der der Sammelschieneneinheit (4) zugekehrten Innenseite der weiteren Abdeckabschnitte (22) in Längsrichtung der Stromsammelschiene (12) verlaufende Stützstege (22.2) angeformt sind.

8. Stromsammelschienenvorrichtung nach einem der vorhergehenden Ansprüche, **dadurch gekennzeichnet, dass** der Berührungsschutz (20) als Bausatz mit mehreren unterschiedlich breiten Abdeckabschnitten (21) für Sammelschieneneinheiten (4) mit unterschiedlicher Anzahl von Stromsammelschienen (2) und/oder unterschiedlichen Querschnittsabmessungen von Stromsammelschienen (2) ausgebildet ist.

9. Stromsammelschienenvorrichtung nach Anspruch 10, **dadurch gekennzeichnet, dass** der Bausatz weitere Abdeckabschnitte (22) in unterschiedlicher Breite aufweist.

10. Stromsammelschienenvorrichtung nach einem der vorhergehenden Ansprüche, **dadurch gekennzeichnet, dass** auf den Stromsammelschienen (2) einer Sammelschieneneinheit (4) von den schmalen Längsseiten der Stromsammelschienen (2) her aufsetzbare und festspannbare Kontaktierkrallen (30) vorhanden sind und dass der Berührungsschutz (20) auf die Kontaktierkrallen (30) aufsetzbare isolierende Abdeckstücke (31) aufweist, die an den Kontaktierkrallen (30) fixierbar sind, wobei die Abdeckabschnitte (21) im Bereich der Kontaktierkrallen (30) ausgespart sind un die weiteren Abdeckabschnitte (22) sich über den Bereich der Kontaktierkrallen (30) ausgespart sind und die weiteren Abdeckabschnitte (22) sich über den Bereich der Kontaktierkrallen (30) entlang der Sammelschieneneinheit (4) erstrecken.

## Claims

1. A busbar device having at least one busbar unit (4) combined to a packet and consisting of multiple current busbars (2) retained in a supporting device (1), which busbars (4) have a rectangular cross section and are arranged parallel to each other with their flat wide longitudinal sides at a spacing, wherein a contact protection device (20) made of insulating material is detachably attached to each busbar unit (4) and fully encloses the same, which contact protection device has first covering sections (21) attached to both sides from the narrow longitudinal sides of the current busbars (2) and extending over the entire width of the busbar unit (4), and comprising additional covering sections (22) covering the wide longitudinal sides of the busbar unit (4); **characterized in that** the first covering sections (21) comprise elevated partial sections (21.1) whose cross section is adjusted to the width of the narrow longitudinal sides of the current busbars (2), and engaging partial sections (21.2) disposed therebetween and adjusted to the spacing between the current busbars (2) within a busbar unit (4), and connecting sections (21.3) on both sides along their longitudinal ends, and **in that** the first covering sections (21) have a constant wall thickness except for the connecting sections (21.3) and a meander-shaped cross section.

2. The busbar device according to claim 1, **characterized in that** the first covering sections (21) each comprise air openings (23) in the area between the current busbars (2).

3. The busbar device according to any one of the preceding claims, **characterized in that** the additional covering sections (22) are molded in one piece onto the first covering sections (21) or are configured as separate parts that can be connected to the first covering sections (21).

4. The busbar device according to claim 3, **characterized in that** the additional covering sections (22) comprise connecting sections (22.3) on their longitudinal edges, which are adjusted for producing a connection, particularly a snap-in or latching connection, at the connecting sections (21.3).

5. The busbar device according to any one of claims 1 to 6, **characterized in that** the longitudinal ends of the first covering sections (21) extend parallel to the wide longitudinal sides of the current busbars (2) along the outer surfaces on both sides of the associated busbar unit (4).

6. The busbar system according to any one of claims 3 to 5, **characterized in that** the connecting sections (21.3) extend away from the adjacent wide longitudinal sides of the busbar unit (4) and **in that** the connecting sections (22.3) are disposed on the inner side of the additional covering sections (22) which face the outer side of the wide longitudinal sides of the busbar unit (4).

7. The busbar device according to any one of claims 3 to 6, **characterized in that** supporting webs (22.2) extending in the longitudinal direction of the current busbar (12) are molded onto the inner side of the additional covering sections (22) which face the busbar unit (4).

8. The busbar device according to any one of the preceding claims, **characterized in that** the contact protection device (20) is designed as a kit with multiple covering sections (21) of different widths for busbar units (4) with a different number of current busbars (2) and/or different cross-sectional dimensions of current busbars (2).

9. The busbar device according to claim 10, **characterized in that** the kit comprises additional covering sections (22) of different widths.

10. The busbar device according to any one of the preceding claims, **characterized in that** contacting clamps (30) are present on the current busbars (2) of a busbar unit (4), which clamps can be attached and tightened from the narrow longitudinal sides of the current busbars (2), and **in that** the contact protection device (20) comprises covering pieces (31) which can be attached to the contacting clamps (30) and fixed onto the contacting clamps (30), wherein the covering sections (21) are recessed in the area of the contacting clamps (30) and the additional covering sections (22) are recessed across the area of the contacting clamps (30) and the additional covering sections (22) extend across the area of the contacting clamps (30) along the busbar unit (4).

## Revendications

1. Dispositif à rail collecteur de courant avec au moins une unité de rail collecteur (4) constituée de plusieurs rails collecteurs (2) maintenus dans un dispositif de support (1), qui présentent une section rectangulaire et qui sont disposés avec leurs côtés longitudinaux larges et plats éloignés et parallèles entre eux, moyennant quoi, sur chaque unité de rail collecteur (4), est montée de manière amovible une protection anti-contact (20), qui l'entoure et qui est constituée d'un matériau isolant, qui comprend des premières portions de recouvrement (21) posées des deux côtés des côtés longitudinaux étroits des rails collecteurs de courant (2), recouvrant toute la largeur de l'unité de rail collecteur (4), ainsi que des portions de recouvrement supplémentaires (22) recouvrant les côtés longitudinaux larges de l'unité de rail collecteur (4) ; **caractérisé en ce que** les premières portions de recouvrement (21) comprennent des portions (21.1) surélevées dont la section est adaptée à la largeur des côtés longitudinaux étroits des rails collecteurs de courant (2) et des portions à parties d'emboîtement (21.2), disposées entre elles, adaptées à la distance des rails collecteurs de courant (2) à l'intérieur d'une unité de rail collecteur (4) et sont munies, le long de leurs portions d'extrémité longitudinales, des deux côtés, de portions de liaison (21.3) et **en ce que** les premières portions de recouvrement (21) présentent, à part les portions de liaison (21.3), une épaisseur de paroi constante et présentent une section en zigzag.

2. Dispositif à rail collecteur selon la revendication 1, **caractérisé en ce que** les premières portions de recouvrement (21) sont munies chacune, dans la zone entre les rails collecteurs de courant (2), d'ouvertures de ventilation (23).

3. Dispositif à rail collecteur selon l'une des revendications précédentes, **caractérisé en ce que** les portions de recouvrement supplémentaires (22) sont moulées d'une seule pièce sur les premières portions de recouvrement (21) ou sont conçues comme des parties séparées pouvant être reliées avec les premières portions de recouvrement (21).

4. Dispositif à rail collecteur selon la revendication 3, **caractérisé en ce que** les portions de recouvrement supplémentaires (22) sont munies, au niveau de leurs bords longitudinaux, de portions de liaison (22.3), qui sont adaptées aux portions de liaison (21.3) pour l'établissement d'une liaison, plus particulièrement d'une liaison par clipsage ou par encliquetage.

5. Dispositif à rail collecteur selon l'une des revendications 1 à 6, **caractérisé en ce que** les portions d'extrémités longitudinales des premières portions de recouvrement (21) s'étendent parallèlement aux côtés longitudinaux larges des rails collecteurs de rouant (2) le long des surfaces externes des deux côtés de l'unité de rail collecteur (4) correspondante.

6. Dispositif à rail collecteur selon l'une des revendications 3 à 5, **caractérisé en ce que** les portions de liaison (21.3) s'éloignent vers l'extérieur des cotés longitudinaux larges de l'unité de rail collecteur (4) et **en ce que** les contre-portions de liaison (22.3) sont disposées sur le côté interne des portions de recouvrement supplémentaires (22), orienté vers le côté externe des côtés longitudinaux larges de l'unité de rail collecteur (4).

7. Dispositif à rail collecteur selon l'une des revendications 3 à 6, **caractérisé en ce que**, sur le côté interne des portions de recouvrement supplémentaires (22), orienté vers l'unité de rail collecteur (4), sont moulées des nervures de soutien (22.2) s'étendant dans la direction longitudinale du rail collecteur de courant (12).

8. Dispositif à rail collecteur selon l'une des revendications précédentes, **caractérisé en ce que** la protection anti-contact (20) est conçu en tant que sous-ensemble avec plusieurs portions de recouvrement (21) de différentes largeurs pour des unités de rails collecteurs (4) avec différents nombres de rails collecteurs de courant (2) et/ou différentes dimensions de sections des rails collecteurs de courant (2).

9. Dispositif à rail collecteur selon la revendication 10, **caractérisé en ce que** le sous-ensemble comprend des portions de recouvrement supplémentaires (22) de différentes largeurs.

10. Dispositif à rail collecteur selon l'une des revendications précédentes, **caractérisé en ce que**, sur les rails collecteurs de courant (2) d'une unité de rail collecteur (4), se trouvent des pinces de contact (30) pouvant être posées et serrées à partir des côtés longitudinaux étroits des rails collecteurs de courant (2) et **en ce que** la protection anti-contact (20) comprend des pièces de recouvrement (31) isolants pouvant être posés sur les pinces de contact (30), les portions de recouvrement (21) étant évidées au niveau des pinces de contact (30) et les portions de recouvrement supplémentaires (22) sont évidées sur la zone des pinces de contact (30) et les portions de recouvrement supplémentaires (22) s'étendent sur la zone des pinces de contact (30) le long de l'unité de rail collecteur (4).
